# EUROPEAN PATENT APPLICATION

(11) **EP 4 525 296 A1**
(43) Date of publication of application: **19.03.2025**
(21) Application number: 23801674.5
(22) Date of filing: 24.01.2023
(51) Int. Cl.: H02P 9/00

(54) **POWER GENERATOR AND POWER GENERATION SYSTEM USING SAME**

(30) Priority: 12.05.2022 JP 2022078815
(71) Applicant: Kaisei Corporation, Tokyo 101-0032 (JP)
(72) Inventor: TANAKA, Akihiko, Saitama-shi, Saitama 331-0813 (JP); TANAKA, Yui, Saitama-shi, Saitama 331-0813 (JP); MIYAGI, Hiroshi, Yokohama-shi, Kanagawa 223-0053 (JP)
(74) Representative: Vossius & Partner Patentanwälte Rechtsanwälte mbB
(86) International application number: PCT/JP2023/002031
(87) International publication number: WO 2023/218700

(57) **Abstract**

In a power generator that generates electricity by utilizing electromagnetic induction between a plurality of permanent magnets provided in a rotor and a plurality of coils which are provided in a stator arranged concentrically with the rotor. The power generator includes a rotational position detection unit 11 that detects a rotational position of the rotor, first switching elements Tr₁₁ and Tr₁₂ provided on a first path through which an induced current generated in a coil 32 flows, and a control unit 12 that controls the first switching elements Tr₁₁ and Tr₁₂ to be turned off in a first period that is at least part of a period in which electromagnetic resistance is generated in a direction opposite to a rotational direction of the rotor due to flowing of the induced current, and controls the first switching elements Tr₁₁ and Tr₁₂ to be turned on in a period other than the first period. During the first period in which electromagnetic resistance is generated when the induced current flows, the induced current in a direction in which the electromagnetic resistance is induced is not allowed to flow on the first path.

## Description

### Technical Field

The present invention relates to a power generator and a power generation system using the same, and more particularly to, a power generator that includes a cylindrical rotor including a plurality of permanent magnets, and a cylindrical stator that includes a plurality of coils and is arranged concentrically with the rotor, and generates a voltage by rotating the rotor, and a power generation system using the same.

### Background Art

In the related art, there is known a power generator that generates electricity by converting magnet energy into electrical energy by using electromagnetic induction in which a change in a magnetic flux passing through a coil generates an electromotive force (voltage) in the coil and this causes a current to flow in the coil. For example, there is known a power generator that includes a cylindrical rotor in which N-pole permanent magnets and S-pole permanent magnets are arranged alternately in a ring shape, and a cylindrical stator that includes a plurality of coils at a position facing the permanent magnets and is arranged concentrically with the rotor, and that generates a voltage by rotating the rotor to change a distance between the permanent magnets and the coils.

In this type of power generator, when the N-pole magnets of the rotor to which a rotating force is applied approach the coils, the magnetic flux penetrating the coil increases. Then, a new magnetic flux is generated in a direction in which the magnetic flux is not intended to increase in the coil, and an induced current flows. In addition, when the N-pole magnets move away from the coil, the magnetic flux penetrating the coil decreases. Then, a new magnetic flux is generated in a direction in which the magnetic flux is not intended to decreases in the coil, and an induced current flows. A direction of the induced current flowing in the coil follows Lenz's law, and the direction of the induced current is opposite between when the N-pole magnets approach the coil and when the N-pole magnets move away from the coil. The direction of the induced current generated when the S-pole magnets approach the coil and when the S-pole magnets move away from the coil becomes opposite to a case of the N-poles.

By the way, in a case where a permanent magnet is displaced due to rotation of the rotor and an induced current is generated in the coil when the permanent magnet passes directly above the stator coil arranged at a position facing the permanent magnet, the coil becomes an electromagnet with magnetic poles facing in the opposite direction to the permanent magnet, and as the permanent magnet moves away from the coil, braking is applied against a rotational direction of the permanent magnet. Therefore, there is a problem that the braking becomes electromagnetic resistance in a direction opposite to the rotational direction, and a deterioration in power generation efficiency of the power generator is caused to occur.

Note that, there is known a power generator in which an electric circuit including a switching element, a drive circuit that turns on and off the switching element, and a position detection circuit is connected to windings of the power generator, and the position detection circuit detects a relative position of a stator and a rotor and outputs the position to the drive circuit, thereby maintaining a phase of a current flowing through the windings in a state which allows the apparatus to operate at high efficiency (for example, refer to PTL 1).

In the power generator described in PTL 1, the drive circuit sequentially turns on and off the switching element connected to three-phase coils on the basis of signals from the position detection circuit, so that the current flowing through the three-phase coils is approximately on a q-axis (flowing at a phase of θ=0), and reluctance torque and torque generated by an induced electromotive force (Fleming's left-hand rule) are both approximately maximized at approximately θ=0. However, this does not suppress generation of electromagnetic resistance itself.

### Citation List

### Patent Literature

PTL 1: JP2003-245000A

### Summary of Invention

### Technical Problem

The invention has been made to solve such problems, and an object thereof is to realize a reduction in electromagnetic resistance that occurs to prevent rotation of a rotor in a power generator that includes a cylindrical rotor including a plurality of permanent magnets and a cylindrical stator including a plurality of coils and arranged concentrically with the rotor and that generates a voltage by rotating the rotor.

### Solution to Problem

To accomplish the object, a power generator of the invention is provided with a cylindrical rotor including a plurality of permanent magnets, and a cylindrical stator that includes a plurality of coils and is arranged concentrically with the rotor, and generates a voltage by rotating the rotor. The power generator has the following configuration. That is, the power generator includes a rotational position detection unit that detects a rotational position of the rotor, a first switching element provided on a first path through which an induced current generated in the coils flows in correspondence with a variation in a distance between the permanent magnet and the coils, and a control unit that controls the first switching element to be turned off in a first period that is at least a part of a period in which electromagnetic resistance in a direction opposite to a rotational direction of the rotor occurs due to flowing of the induced current and to be turned on in a period other than the first period on the basis of a rotational position of the rotor which is detected by the rotational position detection unit.

### Advantageous Effects of Invention

According to the invention configured as described above, during a first period that is at least a part of a period during which electromagnetic resistance occurs when an induced current flows, the first switching element provided on the first path through which the induced current flows is turned off, and thus the induced current does not flow in a direction in which electromagnetic resistance is induced. According to this, it is possible to reduce the electromagnetic resistance that occurs to prevent the rotation of the rotor.

### Brief Description of Drawings

[FIG. 1] FIG. 1 is a view illustrating an overall configuration example of a power generation system according to an embodiment.
[FIG. 2] FIG. 2 is a view illustrating a configuration example of a power generator (excluding a circuit portion) according to this embodiment.
[FIG. 3] FIG. 3 is a view illustrating a configuration example of a circuit portion of the power generator according to this embodiment.
[FIG. 4] FIG. 4 is a view illustrating a first path through which an induced current flows.
[FIG. 5] FIG. 5 is a view illustrating a second path through which a current flows in a direction opposite to the direction through which the induced current flows.
[FIG. 6] FIG. 6 is a view illustrating an example of a control signal output from a control unit, and a voltage waveform that occurs in both ends of a coil.
[FIG. 7] FIG. 7 is a view illustrating another example of the control signal output from the control unit, and the voltage waveform that occurs at both ends of the coil.
[FIG. 8] FIG. 8 is a view illustrating still another example of the control signal output from the control unit, and the voltage waveform that occurs at both ends of the coil.
[FIG. 9] FIG. 9 is a view illustrating another configuration example of the circuit portion of the power generator according to this embodiment.
[FIG. 10] FIG. 10 is a view illustrating another entire configuration example of the power generation system according to this embodiment.
[FIG. 11] FIG. 11 is a view illustrating still another configuration example of the circuit portion of the power generator according to this embodiment.
[FIG. 12] FIG. 12 is a view illustrating an example of a configuration of the control unit according to this embodiment.

### Description of Embodiments

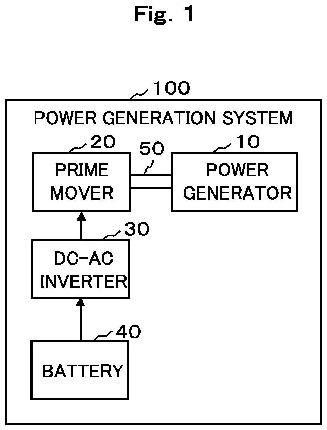

Hereinafter, an embodiment of the invention will be described with reference to the accompanying drawings. FIG. 1 is a view schematically illustrating an entire configuration example of a power generation system according to this embodiment. As illustrated in FIG. 1, a power generation system 100 of this embodiment includes a power generator 10 and a prime mover 20 whose rotors are pivotally supported to the same rotating shaft 50, a DC-AC inverter 30, and a battery 40.

The power generator 10 includes a cylindrical rotor including a plurality of permanent magnets and a cylindrical stator that includes a plurality of coils and is arranged concentrically with the rotor, and generates a voltage by electromagnetic induction between the permanent magnets and the coils when rotating the rotor. The prime mover 20 provides a rotational driving force to the rotor of the power generator 10, and is, for example, a motor. The battery 40 provides an operating power source for the prime mover 20. The DC-AC inverter 30 converts a DC voltage generated due to discharge from the battery 40 into an AC voltage, and applies the AC voltage to the prime mover 20.

The power generation system 100 of this embodiment drives the prime mover 20 to rotate the rotor thereof, and rotates the rotor of the power generator 10 through the rotating shaft 50 fixed to the rotor, thereby performing power generation by using electromagnetic induction between the plurality of permanent magnets arranged in the rotor and the plurality of coils arranged in the stator.

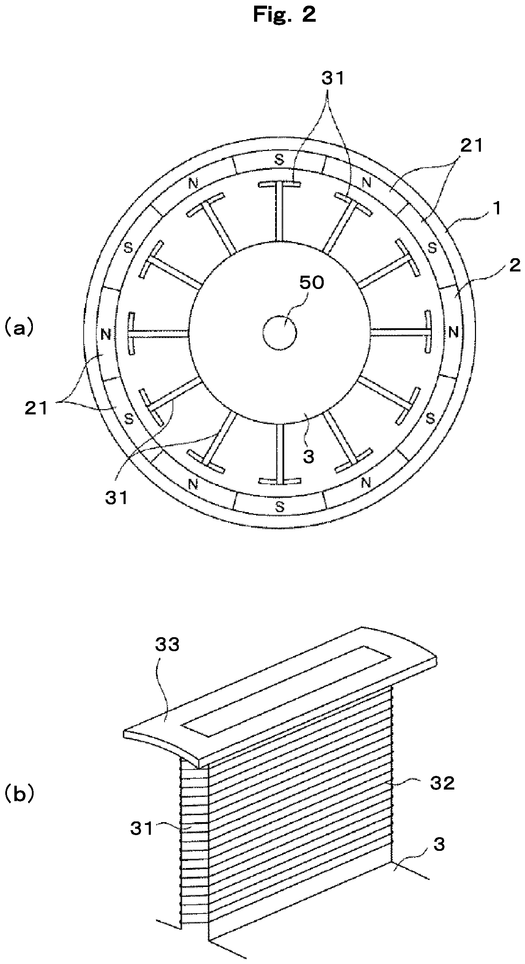

FIG. 2 is a view illustrating a configuration example (excluding a circuit portion) of the power generator 10. As illustrated in FIG. 2(a), the power generator 10 of this embodiment includes a cylindrical rotor 2 that is attached to a rotating shaft 50 that is rotatably supported to a housing 1, and a cylindrical stator 3 that is fixed to the housing 1 and is arranged concentrically with the rotor 2 on an inner side of the rotor 2.

As illustrated in FIG. 2(a), the rotor 2 includes a plurality of permanent magnets 21 arranged in parallel in a ring shape in a rotational direction. In the plurality of permanent magnets 21, an N-pole and an S-pole are alternately arranged in close contact with each other. Each of the permanent magnets 21 is fixed at an equal angular interval with respect to the rotational center of the rotor 2, and is magnetized with parallel anisotropy with each polarity facing a radial direction. The number of the permanent magnets 21 is an even number equal to or more than the number of teeth 31 described below (in this embodiment, the number is set to 12 that is the same number as in the teeth 31).

As illustrated in FIG. 2(a), the stator 3 is arranged to face surfaces of the permanent magnets 21, and includes a plurality of the teeth 31 formed integrally with a cylindrical yoke, and protruding along an outer peripheral surface. In the example of FIG. 2(a), twelve teeth 31 are arranged radially at intervals of 30° with respect to the rotational center of the rotor 2.

As illustrated in FIG. 2(b), the coil 32 is wound around each of the teeth 31 along the periphery. Each of the teeth 31 is a square column having a rectangular cross-section in a peripheral direction and is formed in a plate shape with a short side of approximately 1 to 3 mm. A thin plate-shaped magnetic flux leakage prevention cover member 33, which prevents magnetic flux leakage from an outer side of the tooth 31, is attached to an end portion facing the surface of each of the permanent magnets 21 of the tooth 31. The magnetic flux leakage prevention cover member 33 is formed from, for example, stainless steel that is a kind of non-magnetic material.

The coils 32 are continuously connected to three sets of teeth 31, each set including four teeth 31 at intervals of three teeth, so that currents of the same phase are generated when the teeth 31 receive a magnetic flux from the permanent magnets 21 of the rotor 2. According to this, a three-phase (U-phase, V-phase, and W-phase) AC current is generated. Each of the coils 32 is preferably a high-inductance coil, but there is no particular limitation thereto. The stator 3 has a known configuration capable of collecting three-phase AC currents from the output portions of the coils 32 of the teeth 31 of the U-phase, V-phase, and W-phase.

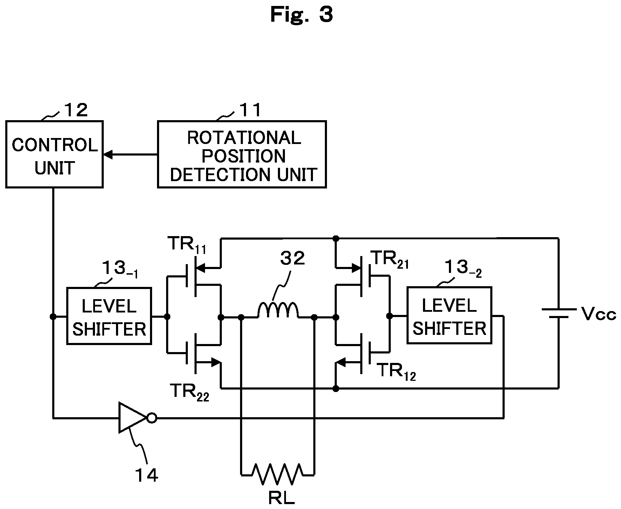

FIG. 3 is a view illustrating a configuration example of the circuit portion of the power generator 10. As illustrated in FIG. 3, the power generator 10 of this example includes a rotational position detection unit 11, a control unit 12, level shifters 13₋₁ and 13₋₂, an inverter 14, first switching elements Tr₁₁ and Tr₁₂, second switching elements Tr₂₁ and Tr₂₂, and a power supply Vcc as a circuit configuration. In configurations illustrated in FIG. 3, the rotational position detection unit 11 and the control unit 12 are shared circuits common to a U-phase, a V-phase, and a W-phase. The other configurations are configuration examples relating to one of the three phases, and similar configurations are also provided for the other two phases.

The rotational position detection unit 11 includes a pulse sensor, and a rotational position of the rotor 2 is detected by the pulse sensor. The pulse sensor is, for example, a magnetic sensor or an optical sensor. The pulse sensor is, for example, a pair of a passive element attached to the rotor 2 of the power generator 10 and an active element attached to the stator 3. An installation position of the active element (hereinafter, referred to as a detection position) is a position that faces the passive element when the rotor 2 rotates and the passive element reaches a predetermined rotational position.

For example, when the pulse sensor is configured with the magnetic sensor, the pulse sensor detects the magnitude of a magnetic field emitted from a detection magnet serving as an active element attached to the detection position of the stator 3 using a passive element, and outputs a pulse signal when a detected magnetic field is maximized (when the passive element of the rotor 2 is closest to and faces the active element of the stator 3). When one passive element of the rotor 2 and one active element of the stator 3 are provided, whenever the rotor 2 rotates once, the pulse sensor detects the rotational position when the passive element attached to the rotor 2 is closest to the detection position where the active element of the stator 3 is installed, and outputs one pulse signal every time the rotor 2 makes one turn. The same is true of a case where the pulse sensor is configured with the optical sensor.

Note that, a plurality of the passive elements may be provided for the rotor 2. In this case, a pulse signal is output a plurality of times for each rotation of the rotor 2. Here, it is preferable to provide the plurality of passive elements at equal intervals in the rotational direction of the rotor 2 so that a plurality of pulse signals are output at equal time intervals when the rotor 2 is in a steady state rotating at a constant speed. Conversely, a single passive element may be attached to the rotor 2, and a plurality of active elements may be provided for the stator 3.

In addition, instead of installing the pulse sensor in the rotor 2 of the power generator 10, the pulse sensor may be attached to a rotor (not shown) of the prime mover 20 or the rotating shaft 50. In addition, an active element may be installed in the rotor, and a passive element may be installed in the stator.

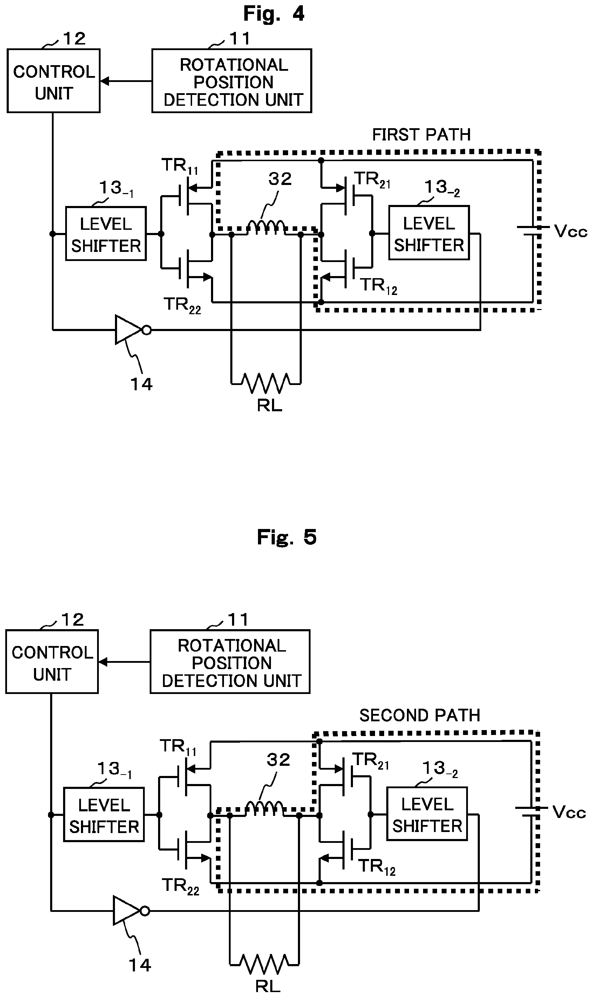

The first switching elements Tr₁₁ and Tr₁₂ are provided on a first path through which an induced current generated in the coil 32 in correspondence with a variation in a distance between the permanent magnet 21 of the rotor 2 and the coil 32 of the stator 3 flows, and are turned on and off under the control of the control unit 12. FIG. 4 is a view illustrating the first path. As shown by a thick dotted line in FIG. 4, the first path is a path that passes through the power supply Vcc, the first switching elements Tr₁₁ and Tr₁₂, and the coil 32. The induced current generated in the coil 32 by electromagnetic induction is output from both ends of the coil 32 to a load RL.

The second switching elements Tr₂₁ and Tr₂₂ are provided on a second path for causing a current to pass through the coil 32 in a direction opposite to the direction in which the induced current flows, and are turned on and off under the control of the control unit 12. FIG. 5 is a view illustrating the second path. As shown by a thick dotted line in FIG. 5, the second path is a path that passes through the power supply Vcc, the second switching elements Tr₂₁ and Tr₂₂, and the coil 32. At this time, the current flowing through the coil 32 is output from both ends of the coil 32 to the load RL.

The first switching elements Tr₁₁ and Tr₁₂ and the second switching elements Tr₂₁ and Tr₂₂ (hereinafter, these four switching elements may be collectively referred to simply as "switching elements Tr") are configured with, for example, transistors such as MOSFETs, and are turned on or off by a signal input to gate terminals thereof. Here, the two switching elements Tr₁₁ and Tr₂₁ on an upper side of the drawing are n-channel MOSFETs, and two switching elements Tr₁₂ and Tr₂₂ on a lower side are p-channel MOSFETs. As illustrated in FIG. 3, these four switching elements Tr form an H-bridge circuit.

The control unit 12 outputs a control signal consisting, for example, a rectangular wave. This control signal is input to the gate terminals of the switching elements Tr via level shifters 13₋₁ and 13₋₂ and the inverter 14. During a period in which the control unit 12 outputs a Low control signal, the first switching elements Tr₁₁ and Tr₁₂ are turned on, and the second switching elements Tr₂₁ and Tr₂₂ are turned off. On the other hand, during a period in which the control unit 12 outputs a control signal Hi, the first switching elements Tr₁₁ and Tr₁₂ are turned off, and the second switching elements Tr₂₁ and Tr₂₂ are turned on.

Note that, the control unit 12 can be configured by any of hardware, a digital signal processor (DSP), and software. For example, when being configured by software, the control unit 12 is actually configured by a microcomputer including a CPU, RAM, ROM, and the like of a computer, and is realized by an operation of a program stored in a storage medium such as the RAM, ROM, hard disk, and semiconductor memory.

The control unit 12 controls the first switching elements Tr₁₁ and Tr₁₂ to be turned off in a first period that is at least a part of the period in which an induced current flows through the coil 32 and electromagnetic resistance is generated in a direction opposite to the rotational direction of the rotor 2, and to be turned on in a period other than the first period on the basis of the rotational position of the rotor 2 which is detected by the rotational position detection unit 11. The control unit 12 also controls the second switching elements Tr₂₁ and Tr₂₂ to be turned on in a second period that is at least a part of the first period in which the first switching elements Tr₁₁ and Tr₁₂ are turned off, and to be turned off in a period other than the second period.

In this embodiment, the period in which electromagnetic resistance occurs in a direction opposite to the rotational direction of the rotor 2 is a period in which each of the N-pole permanent magnets 21 moves away from the coil 32 and a period in which each of the S-pole permanent magnets 21 moves away from the coil 32. That is, there are two periods including a period from a timing when the N-pole permanent magnet 21 is closest to the coil 32 to a timing when the N-pole permanent magnet 21 moves farthest from the coil 32, and a period from a timing when the S-pole permanent magnet 21 is closest to the coil 32 to a timing when the S-pole permanent magnet 21 moves farthest from the coil 32.

For example, when the pulse sensor of the rotational position detection unit 11 is configured by a combination of one active element and one passive element, the active element and the passive element of the pulse sensor are installed at positions where a relative positional relationship where the permanent magnet 21 and the coil 32 are closest to each other can be detected. According to this, the timing at which the permanent magnet 21 and the coil 32 are closest to each other can be detected by the rotational position detection unit 11. In addition, in a case where rotational time required for the permanent magnet 21 and the coil 32 from being closest to each other to being farthest from each other is calculated in advance on the basis of a relationship between a rotational speed of the rotor 2 in a steady state and the size of the permanent magnet 21, it is also possible to specify the timing at which the permanent magnet 21 and the coil 32 are farthest from each other on the basis of the timing detected by the rotational position detection unit 11 and the rotational time calculated in advance.

Note that, in a case where the power generator 10 is configured as illustrated in FIG. 2 and two passive elements of the pulse sensor are installed in the rotor 2 at an interval of 30°, it is possible for the rotational position detection unit 11 to detect the timing when the permanent magnet 21 is closest to the coil 32 and the timing when the permanent magnet 21 is farthest from the coil 32.

In this embodiment, the first period and the second period are the same period. That is, the entire first period is the second period, and when the first switching elements Tr₁₁ and Tr₁₂ are turned on, the second switching elements Tr₂₁ and Tr₂₂ are turned off, and when the first switching elements Tr₁₁ and Tr₁₂ are turned off, the second switching elements Tr₂₁ and Tr₂₂ are turned on.

The control unit 12 may monitor whether the rotor 2 has reached a steady state of constant speed rotation on the basis of pulse signals of detection results sequentially output from the rotational position detection unit 11 in correspondence with the rotation of the rotor 2, and control on/off of the switching elements Tr after detecting that the steady state has been reached. In this way, it is possible to more accurately detect the first period (= second period) and more precisely control the on/off of the switching elements Tr.

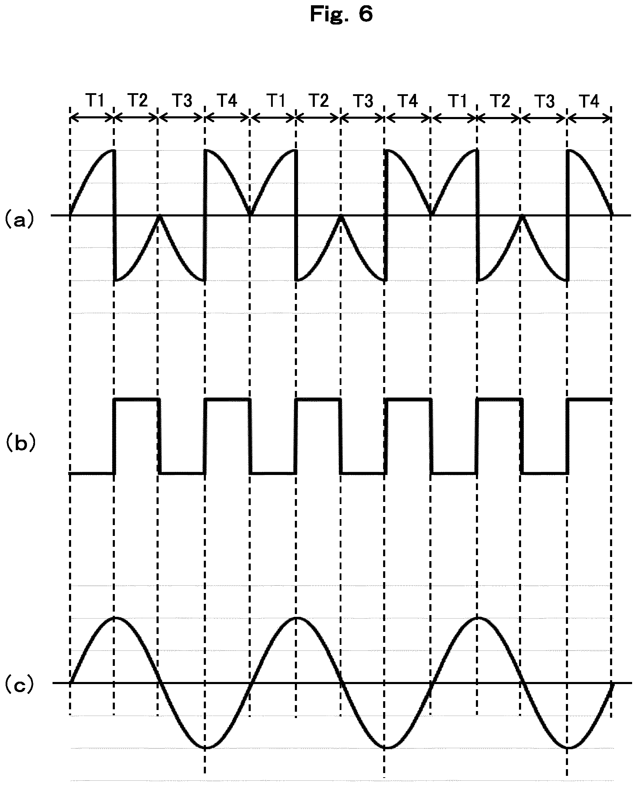

FIG. 6 is a view illustrating a control signal (FIG. 6(b)) output by the control unit 12 and a voltage waveform (FIG. 6(a)) generated at both ends of the coil 32. FIG. 6 illustrates an example in which a period in which electromagnetic resistance occurs in a direction opposite to the rotational direction of the rotor 2 (the period in which the coil 32 moves away from the permanent magnet 21), the first period in which the first switching elements Tr₁₁ and Tr₁₂ are turned off, and the second period in which the second switching elements Tr₂₁ and Tr₂₂ are turned on are the same as each other. Note that, FIG. 6(c) illustrates a voltage waveform in the related art for reference in a case where no switching element Tr is provided.

In FIG. 6, a period T1 is a period in which the N-pole permanent magnet 21 approaches the coil 32. A period T2 is a period in which the N-pole permanent magnet 21 moves away from the coil 32. A period T3 is a period in which the S-pole permanent magnet 21 approaches the coil 32. A period T4 is a period in which the S-pole permanent magnet 21 moves away from the coil 32. The control unit 12 outputs a rectangular wave control signal that is Low in the periods T1 and T3 and Hi in the periods T2 and T4, as shown in FIG. 6 (b) .

As a result, in the periods T1 and T3, the first switching elements Tr₁₁ and Tr₁₂ are turned on, the second switching elements Tr₂₁ and Tr₂₂ are turned off, and the induced current generated in the coil 32 flows along the first path in FIG. 4. At this time, the induced current generated in the coil 32 by electromagnetic induction is output from both ends of the coil 32 to the load RL.

In addition, in the periods T2 and T4 (= first and second periods), the first switching elements Tr₁₁ and Tr₁₂ are turned off, the second switching elements Tr₂₁ and Tr₂₂ are turned on, and the current supplied from the power supply Vcc flows along the second path in FIG. 5. At this time, a current is output from both ends of the coil 32 to the load RL. As can be seen by comparing FIG. 6(a) and FIG. 6(c), no induced current flows during the periods T2 and T4, and a current flows in a direction opposite to the direction in which the induced current would normally flow.

According to the power generator 10 of this embodiment configured as described above, in a period (= the first period indicated by the periods T2 and T4) in which electromagnetic resistance occurs when an induced current flows through the coil 32, the first switching elements Tr₁₁ and Tr₁₂ provided on the first path through which the induced current flows are turned off, and thus the induced current does not flow in a direction in which electromagnetic resistance is induced. According to this, it is possible to reduce the electromagnetic resistance that occurs so as to prevent the rotor 2 from rotating.

In addition, in the power generator 10 of this embodiment, in a second period (= the periods T2 and T4) that is the same as the first period, the second switching elements Tr₂₁ and Tr₂₂ provided on the second path are turned on, and thus a current in a direction opposite to the flowing direction of the induced current flows through the coil 32. As a result, the electromagnetic force generated by the opposite current according to a Fleming's left-hand rule coincides with the rotational direction of the rotor 2, and an effect of assisting the rotation of the rotor 2 can be obtained.

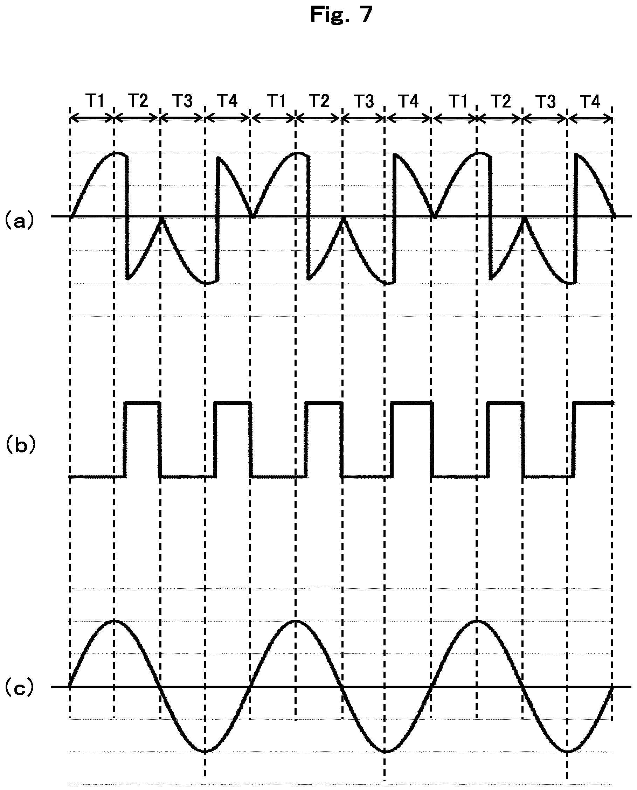

Note that, FIG. 6 illustrates an example in which the first period in which the first switching elements Tr₁₁ and Tr₁₂ are turned off is the same as the period in which electromagnetic resistance occurs in a direction opposite to the rotational direction of the rotor 2, but there is no limitation thereto. FIG. 7 illustrates an example in which the first period in which the first switching elements Tr₁₁ and Tr₁₂ are turned off is shorter than the period in which electromagnetic resistance occurs. Here, the first period is defined as a period from a timing after a predetermined time after the start of the period in which electromagnetic resistance occurs (a timing after a predetermined time after the permanent magnet 21 is closest to the coil 32) to a timing in which the permanent magnet 21 is farthest from the coil 32. Note that, the first period may be a period up to a predetermined time before the timing in which the permanent magnet 21 is farthest from the coil 32.

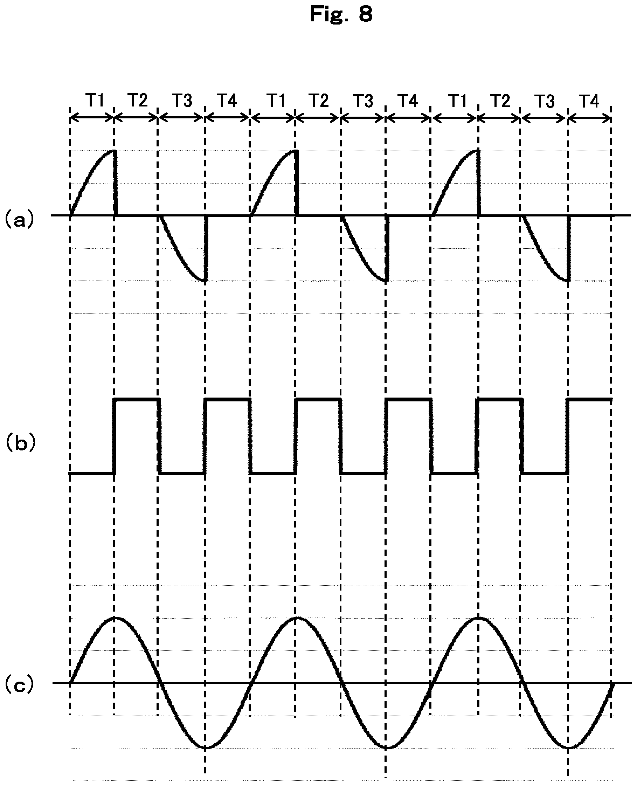

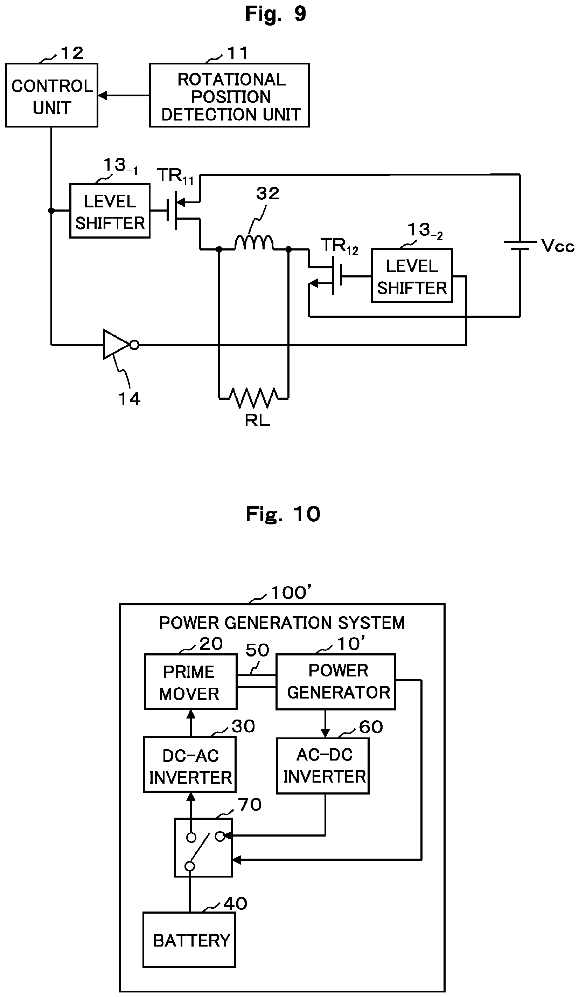

In addition, FIG. 6 illustrates an example in which the second switching elements Tr₂₁ and Tr₂₂ are turned on in the second period that is the same as the first period in which the first switching elements Tr₁₁ and Tr₁₂ are turned off, but there is no limitation thereto. FIG. 8 shows an example in which the second switching elements Tr₂₁ and Tr₂₂ are always turned off. In this case, the second switching elements Tr₂₁ and Tr₂₂ may be omitted, and the circuit portion of the power generator 10 may be configured as shown in FIG. 9.

Note that, since during the period when a current is flowing through the second path as in FIG. 5, the first path is not formed in the direction in which the induced current generated in the coil 32 flows, the induced current generated according to a Fleming's right-hand rule does not flow through the coil 32. In other words, only the current from the power supply Vcc flows through the coil 32. However, when an electromotive voltage generated in the coil 32 exceeds a voltage of the power supply Vcc, there is a possibility that the induced current will flow back from the coil 32 to the second switching element Tr₂₁.

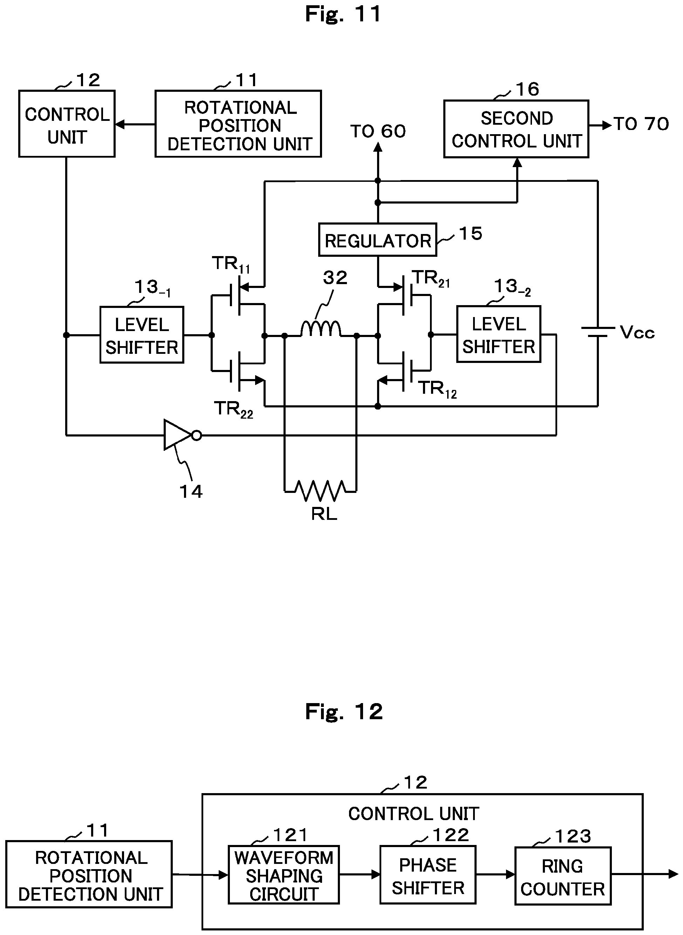

Therefore, this reverse current may be utilized to charge the battery 40. FIG. 10 is a view illustrating an example of a configuration of a power generation system 100' provided with a function of charging the battery 40. FIG. 11 is a view illustrating an example of a circuit configuration of a power generator 10' used in the power generation system 100' provided with a function of charging the battery 40. In FIGS. 10 and 11, components with the same reference numerals as those shown in FIGS. 1 and 3 have the same functions, and thus redundant description will be omitted here.

The power generation system 100' shown in FIG. 10 further includes an AC-DC inverter 60 and a charge and discharge changeover switch 70 in addition to the configuration shown in FIG. 1. The power generator 10' shown in FIG. 11 further includes a regulator 15 and a second control unit 16 in addition to the configuration shown in FIG. 3.

The second control unit 16 can be configured by any of hardware, DSP, and software. For example, when being configured by software, the second control unit 16 is actually configured by a microcomputer including a CPU, RAM, ROM, and the like of a computer, and is realized by an operation of a program stored in a storage medium such as the RAM, ROM, hard disk, and semiconductor memory. Here, a configuration in which the control unit 12 and the second control unit 16 are provided separately is shown, but the control unit 12 may have a function of the second control unit 16.

The AC-DC inverter 60 converts an AC voltage generated by the power generator 10' into a DC voltage. The AC voltage stated here is a voltage generated by a current flowing back through the second switching element Tr₂₁. The charge and discharge changeover switch 70 is a switch for switching between charging and discharging of the battery 40. The changeover of the charge and discharge changeover switch 70 is controlled by the second control unit 16 of the power generator 10'.

The regulator 15 is configured to limit the current flowing back through the second switching element Tr₂₁ so as not to exceed a predetermined value. The second control unit 16 monitors whether a current flowing back through the second switching element Tr₂₁ occurs during the second period, and when detecting occurrence of flowing-back, the second control unit 16 controls the charge and discharge changeover switch 70 to switch from a discharge side to a charge side, thereby charging the battery 40 with the flowing-back current.

Note that, in the above-described embodiment, an example in which the period in which the control unit 12 outputs a Hi control signal, that is, the first period and the second period are set in advance, but the period may be arbitrarily adjusted. For example, as shown in FIG. 12, the control unit 12 may include a waveform shaping circuit 121 that shapes the pulse signal output from the rotational position detection unit 11 into a rectangular wave, a phase shifter 122 that changes a phase of the rectangular wave shaped by the waveform shaping circuit 121, and a ring counter 123 that changes a duty width of the rectangular wave that is phase-shifted by the phase shifter 122, and an output signal of the ring counter 123 may be used as a control signal. In this case, the amount of phase variation by the phase shifter 122 and the amount of duty width variation by the ring counter 123 are adjusted by parameters that can be arbitrarily set. Note that, instead of the ring counter 123, a pulse width modulation (PWM) circuit may be used.

In addition, in the above-described embodiment, description has been given of an example in which the first period and the second period are the same period, that is, the entire first period is the second period, but a part of the first period may be the second period. In this case, it is necessary to configure the circuit so that the on/off of the first switching elements Tr₁₁ and Tr₁₂ and the on/off of the second switching elements Tr₂₁ and Tr₂₂ can be controlled separately.

In the above-described embodiment, the prime mover 20 is described as a motor, but the invention is not limited thereto. For example, the prime mover 20 may be a prime mover that utilizes natural energy power generation such as wind power generation, hydroelectric power generation, or solar power generation.

In addition, in the above-described embodiment, the battery 40 and the power supply Vcc are provided separately, but these may be shared.

In addition, the above-described embodiments are merely examples of the implementation of the invention, and the technical scope of the invention should not be interpreted as being limited by the embodiments. In other words, the invention can be implemented in various forms without departing from the gist or main characteristics of the invention.

### Reference Signs List

2: rotor
3: stator
10. 10': power generator
11: rotational position detection unit
12: control unit
16: second control unit
20: prime mover
21: permanent magnet
32: coil
40: battery
70: charge and discharge changeover switch
100, 100': power generation system
Tr₁₁, Tr₁₂: first switching element
Tr₂₁, Tr₂₂: second switching element

## Claims

1. A power generator that is provided with a cylindrical rotor including a plurality of permanent magnets, and a cylindrical stator that includes a plurality of coils and is arranged concentrically with the rotor, and generates a voltage by rotating the rotor, comprising:
a rotational position detection unit that detects a rotational position of the rotor;
a first switching element provided on a first path through which an induced current generated in the coils flows in correspondence with a variation in a distance between the permanent magnet and the coils; and
a control unit that controls the first switching element to be turned off in a first period that is at least a part of a period in which electromagnetic resistance in a direction opposite to a rotational direction of the rotor occurs due to flowing of the induced current and controls the first switching element to be turned on in a period other than the first period on the basis of a rotational position of the rotor which is detected by the rotational position detection unit.

2. The power generator according to claim 1, further comprising:
a second switching element provided on a second path for causing a current to flow through the coil in a direction opposite to a direction in which the induced current flows,
wherein the control unit controls the second switching element to be turned on in a second period that is at least a part of the first period in which the first switching element is turned off, and controls the second switching element to be turned off in a period other than the second period.

3. The power generator according to claim 2,
wherein the first switching element and the second switching element form an H-bridge circuit.

4. The power generator according to any one of claims 1 to 3,
wherein the control unit monitors whether the rotor has reached a steady state of constant speed rotation on the basis of detection result signals sequentially output from the rotational position detection unit in correspondence with rotation of the rotor, and controls on/off of the switching elements after detecting that the steady state has been reached.

5. A power generation system, comprising:
the power generator according to claim 2 or 3;
a prime mover that applies a rotational driving force to the rotor;
a battery that applies an operating power source of the prime mover;
a charge and discharge changeover switch that switches charge or discharge of the battery; and
a second control unit that controls the charge and discharge changeover switch to be switched from a discharge side to a charge side in a case where a current flowing back through the second switching element occurs in the second period so as to charge the battery by the flowing back current.
